# EUROPÄISCHE PATENTSCHRIFT

(11) **EP 2 039 547 B1**
(45) Veröffentlichungstag und Bekanntmachung des Hinweises auf die Patenterteilung: **14.08.2013**
(21) Anmeldenummer: 08015502.1
(22) Anmeldetag: 03.09.2008
(51) Int. Cl.: B60J 1/20

(54) **Seitenfensterrollo mit Einlaufhilfe**
Side window blind with intake aid
Store de fenêtre latérale doté d'une aide à l'introduction

(30) Priorität: 21.09.2007 DE 102007045414
(43) Veröffentlichungstag der Anmeldung: 25.03.2009
(73) Patentinhaber: BOS GmbH & Co. KG, 73760 Ostfildern (DE)
(72) Erfinder: Hansen, Melf, 75053 Gondelsheim (DE)
(74) Vertreter: Rüger, Barthelt & Abel

(56) Entgegenhaltungen:
- EP-A1- 1 157 870
- EP-A1- 1 336 519
- EP-A2- 1 136 289
- DE-A1- 19 835 257
- DE-A1-102004 049 059
- DE-U1- 29 913 753
- DE-U1-202004 014 652
- DE-U1-202006 011 248
- US-A- 5 615 729
- US-A- 5 752 560

## Beschreibung

Bei Seitenfensterrollos von Kraftfahrzeugen geht zur Zeit der Trend dahin, die Führungseinrichtungen zum Führen der Rollobahn möglichst zu verbergen. Damit müssen die bislang verwendeten Führungsschienen, die seitlich des rechteckigen Teils des Fensters verlaufen, durch Führungs- oder Tragstäbe ersetzt werden. Bei ausgefahrenem Rollo tragen die Tragstäbe, wie ihr Name bereits sagt, den Zugstab, der an der freien Kante der Rollobahn angebracht ist. Sie übernehmen damit zwei Funktionen, nämlich den Zugstab so zu führen, dass er an der Scheibe bleibt und andererseits erzeugen sie die notwendige Schubkraft, um die Rollobahn von der Wickelwelle abzuwickeln und gespannt zu halten.

Der Zugstab, der an dem freien oberen Ende des oder der Tragstäbe befestigt ist, soll dabei die von den Tragstäben ausgeübte Kraft gleichmäßig auf die Rollobahn verteilen, damit sie in allen Bereichen faltenfrei straff gehalten ist. Insbesondere wird es als unschön empfunden, wenn in der Rollobahn irgendwelche Schrägfalten auftreten. Diese können entstehen, wenn der Winkel, der die Verbindung zwischen Tragstab und Zugstab aufweist, versetzt ist gegenüber dem Winkel, den die Rollobahn aufgrund ihrer Gestalt beim Abwickeln von der Wickelwelle einnehmen will.

Die DE 20 2004 014 652 U1 beschreibt eine Fahrzeugtür mit einem Fensterrollo, dessen Rollobahn mittels eines Rollomechanismus im Wesentlichen parallel zur Fensterscheibe bewegbar ist, wobei ein Teil des Rollomechanismus an der Fensterheber-Führungsschiene geführt ist. Demgemäß ist die Wickelwelle des Fensterrollos außerhalb des Türschachts unverdeckt angeordnet .

Problematisch bei den bekannten Lösungen sind auch konische Wickelwellen. Diese sind bislang nur in Verbindung mit manuell zu betätigenden Rollos einzusetzen.

Problematisch bei solchen Seitenfensterrollos mit Tragstab ist einerseits die Klapperfreiheit und andererseits das korrekte Einlaufen des Zugstabs in den Auslaufschlitz an der Fensterunterkante.

Ausgehend hiervon ist es gemäß einem Aspekt der Erfindung Aufgabe ein Seitenfensterrollo zu schaffen, das zuverlässig einläuft.

Das neue Seitenfensterrollo für Kraftfahrzeuge ist an Seitenfenstern mit der Fensterscheibe einsetzbar. Das Seitenfenster weist eine Fensterunterkante und eine Fensteroberkante auf. Im Bereich der Fensterunterkante ist ein Auslaufschlitz vorhanden. Unterhalb des Auslaufschlitzes und damit im Türkorpus, ist eine Wickelwelle drehbar gelagert an der mit einer Kante die Rollobahn befestigt ist.

Die von der Wickelwelle abliegenden Kante der Rollobahn ist mit einem Zugstab verbunden. Dieser Zugstab wird von einem einzigen Tragstab getragen dessen oberes Ende mit dem Zugstab verbunden ist so dass der Zugstab und der Tragstab eine T-förmige Konfiguration bilden. Für den Tragstab ist innerhalb des Türkorpus eine Führungseinrichtung vorhanden, mit der der Tragstab in einem vorgegebenen Winkel zur Fensterkante vertikal verschieblich geführt ist.

Damit der Zugstab ordnungsgemäß in den Auslaufschlitz einläuft und in bei eingefahrenem Seitenfensterrollo auch verschließt ist eine Ausrichthilfe gemäß dem kennzeichnenden Teil des Anspruchs 1 vorhanden, durch die der Zugstab unabhängig von der Führungseinrichtung in eine Lage gebracht wird in die der Zugstab einwandfrei in den Auszugsschlitz eintauchen kann.

Aufgrund dieser neuen Lösung wird ein Verkanten des Zugstabs vermieden was dann dazu führen würde, dass der Zugstab mit seiner Unterseite an den Rändern des Auslaufschlitzes aufliegt und nicht im Auslaufschlitz diesen verschließend verschwindet. Ein solches Verdrehen oder Verkanten ist deswegen möglich weil der Zugstab, zumindest im Bereich seines unteren Bewegungswegs, in der Nähe der Fensterunterkante gegenüber der Fensterscheibe erhebliches Spiel aufweist und die Führungseinrichtung zwangsläufig nicht so stabil und steif ausgebildet werden kann, dass Torsionsbewegungen um die Längsachse des Tragstabs mit Sicherheit ausgeschlossen werden. Es genügen bereits geringe Verdrehungen im Rahmen der Elastizität, dass der Zugstab mit seinen äußeren Enden auf den Schlitzrand aufstößt und diesen beispielsweise um 1 mm, 2 mm oder 3 mm überdeckt. Wegen der normalerweise flachen Anlageflächen, die stumpf aufeinander treffen bleibt der Zugstab auf dem Rand des Auszugsschlitzes in unschöner Weise liegen. Durch die Ausrichthilfe werden solche Verkantungen, unabhängig von der Festigkeit der Führungseinrichtung, mit Sicherheit vermieden.

Die Ausrichthilfe ist sowohl bei solchen Seitenfensterrollos zweckmäßig, die elektrisch betätigt werden, als auch bei solchen Rollos, die manuell betätigt werden, wobei dem Tragstab lediglich eine Bremse zugeordnet ist, die bei der manuellen Betätigung überwunden wird.

Die Ausrichthilfe ist an dem Zugstab oder zusätzlich an dem Einlaufschlitz vorgesehen. Eine geeignete Ausrichthilfe am Einlaufschlitz kann beispielsweise darin bestehen, dass der Auslaufschlitz in der Nähe der Enden des eingefahrenen Zugstabs entsprechend geringfügig abgeschrägt ist. Diese Abschrägung ist auf den Endbereich des Auszugsschlitzes beschränkt so dass die Ausnehmung nicht störend in Erscheinung tritt.

Die Ausrichthilfe ist erfindungsgemäß am Zustab in Gestalt eines Ausrichtfortsatzes vorgesehen, der von der Unterseite des Zugstabs in Richtung auf die Fensterunterkante zeigt.

Der Ausrichtfortsatz ist keilförmig ausgeführt.

Es können auch zwei Ausrichtfortsätze vorhanden sein, die beidseits des Tragstabs angeordnet sind, um Verdrehungen in beiden möglichen Drehrichtungen gegenüber der Längsachse des Auszugsschlitzes beherrschen zu können.

Sie können sich auf ein kurzes Stück, bezogen auf die Längserstreckung des Zugstabs, beschränken oder über die gesamte Länge des Zugstabs zu beiden Seiten des Tragstabs durchlassen.

Die Führungseinrichtung für den Tragstab kann eine Führungsschiene umfassen, die eine Führungsnut enthält, die sich mit konstantem Querschnitt über die Führungsschiene fortsetzt.

Zum Betätigen kann der Tragstab mit einem Fortsatz versehen sein, der durch die Führungsnut nach außen vorsteht. Der Tragstab kann mittels eines zugeordneten linienförmigen Betätigungsgliedes zumindest in Ausschubrichtung bewegbar sein.

Wenn ein manuelles Seitenfensterrollo ausgeführt wird, genügt es, wenn der Wickelwelle ein Federmotor zugeordnet ist. Im Falle eines elektrisch betätigten Seitenfensterrollos ist zusätzlich ein elektrischer Getriebemotor vorhanden, mit dem der Tragstab wahlweise auf und ab bewegt werden kann.

Gemäß einem weiteren, nicht beanspruchten, Aspekt der Erfindung geht es darum, bei Seitenfensterrollos die mit einem oder mehreren Tragstäben bewegt werden, ein Klappern zu vermeiden, wenn das Rollo ausgefahren ist und der Tragstab in seiner oberen Endstellung steht. Die unvermeidbaren Fahrzeugerschütterungen können dazu führen, dass der Tragstab, zumindest mit den Enden, an der Scheibe anschlägt.

Es ist deswegen eine weitere Aufgabe der Erfindung ein Seitenfensterrollo zu schaffen, das klapperfrei ist.

Das neue Seitenfensterrollo eignet sich für Seitenfenster von Kraftfahrzeugen, die eine Fensterscheibe enthalten und bei denen das Seitenfensterrollo durch eine Fensterunterkante begrenzt ist. In der Fensterunterkante befindet sich ein Auslaufschlitz unterhalb derer eine Wickelwelle drehbar gelagert ist. An der Wickelwelle ist mit einer Kante eine Rollobahn befestigt. Das von der Wickelwelle abliegende Ende der Rollobahn ist mit einem Zugstab verbunden.

Zur Bewegung des Zugstabs sind ein oder zwei Tragstäbe vorgesehen, die den Zugstab tragen und in Richtung der quer zur Fensterscheibe auch führen.

Den Tragstäben sind Führungseinrichtungen zugeordnet, die sich im Türkorpus unterhalb der Fensterunterkante befinden. Die Führungseinrichtungen sind so angeordnet, dass die Tragstäbe unter einem Winkel zur Fensterunterkante geführt werden und gleichzeitig in einer Ebene, die mit der durch die Fensterscheibe definierten Ebene einen spitzen Winkel einschließt. Dadurch wird erreicht, dass die Tragstäbe sich während ihres Ausfahrhubs zunehmend an die Fensterscheibe annähern. Hierdurch wird es möglich, dass in Verbindung mit der Flexibilität der Tragstäbe der an den Tragstäben befestigte Zugstab, zumindest im oberen Bereich seines Bewegungswegs, gegen die Fensterscheibe angedrückt wird. Wenn die Vorspannkraft größer ist als die bei dem normalen Fahrbetrieb auftretenden Erschütterungen bleibt der Zugstab an der Fensterscheibe anliegend gehalten.

Die Vorspannung des Zugstabs gegen die Fensterscheibe ist sowohl bei elektrisch betätigten als auch bei manuellen Seitenfensterrollos von Vorteil.

Eine definierte Anlage an der Fensterscheibe wird erreicht, wenn am Zugstab zwei voneinander beabstandete Anlageelemente vorhanden sind. Diese können hinsichtlich des Materials obendrein so ausgewählt werden, dass sie auch bei längerem Betrieb keine Schleifspuren auf der Fensteroberfläche erzeugen.

Zweckmäßigerweise werden die Anlageelemente von je einer drehbar gelagerten Rolle gebildet. Hierdurch wird eine Rollbewegung erzeugt, die keine Schleifspuren hinterlässt.

Die Führungseinrichtung kann von einer Führungsschiene gebildet sein, die eine Führungsnut enthält, die sich mit konstantem Querschnitt über die Führungsschiene fortsetzt.

Zum Betrieb des Tragstabs kann ein Arm oder Fortsatz vorhanden sein, der durch die Führungsnut nach außen ragt und an dem ein Antriebsglied angreift.

Unabhängig davon, wie das Rollo betätigt wird, ob manuell oder elektrisch, kann zweckmäßigerweise der Wickelwelle ein Federmotor zugeordnet sein.

Im Falle eines manuellen Seitenfensterrollos genügt es, wenn der Führungseinrichtung eine Bremseinrichtung zugeordnet ist, um den Tragstab in der ausgefahrenen Stellung zu halten. Bei elektrischer Betätigung ist ein elektrischer Getriebemotor vorgesehen, der mit dem oder den Tragstäben zusammenwirkt.

Im Übrigen sind Weiterbildungen der Erfindung Gegenstand von Unteransprüchen.

Die nachfolgende Figurenbeschreibung erläutert Aspekte zum Verständnis der Erfindung. Weitere nicht beschriebene Details kann der Fachmann in der gewohnten Weise den Zeichnungen entnehmen, die insoweit die Figurenbeschreibung ergänzen. Es ist klar, dass eine Reihe von Abwandlungen möglich sind.

Die nachfolgenden Zeichnungen sind nicht unbedingt maßstäblich. Zur Veranschaulichung von Details können möglicherweise bestimmte Bereiche übertrieben groß dargestellt sein. Darüber hinaus sind die Zeichnungen plakativ vereinfacht und enthalten nicht jedes bei der praktischen Ausführung gegebenenfalls vorhandene Detail. Die Begriffe "oben" und "unten" bzw. "vorne" und "hinten" beziehen sich auf die normale Einlage bzw. die Terminologie bei Kraftfahrzeugen.

In der Zeichnung sind Ausführungsbeispiele des Gegenstandes der Erfindung dargestellt.
Fig. 1 zeigt den aufgebrochenen Heckbereich eines PKWs.
Fig. 2 zeigt in einer stark schematisierten Darstellung die hintere rechte Seitentür mit aufgebrochener Innenverkleidung.
Fig. 3 zeigt in einer perspektivischen Explosionsdarstellung und im Ausschnitt die Verbindung zwischen dem Tragstab und dem Zugstab des Rollos nach Fig. 2.
Fig. 4 zeigt in einer perspektivischen Ausschnittsdarstellung den Federmotor des Seitenfensterrollos nach Fig. 2.
Fig. 5 zeigt in einer schematisierten Darstellung einen Seitenfensterrollo im ausgefahrenen Zustand, mit einer konischen Wickelwelle und zwei Tragstäben.

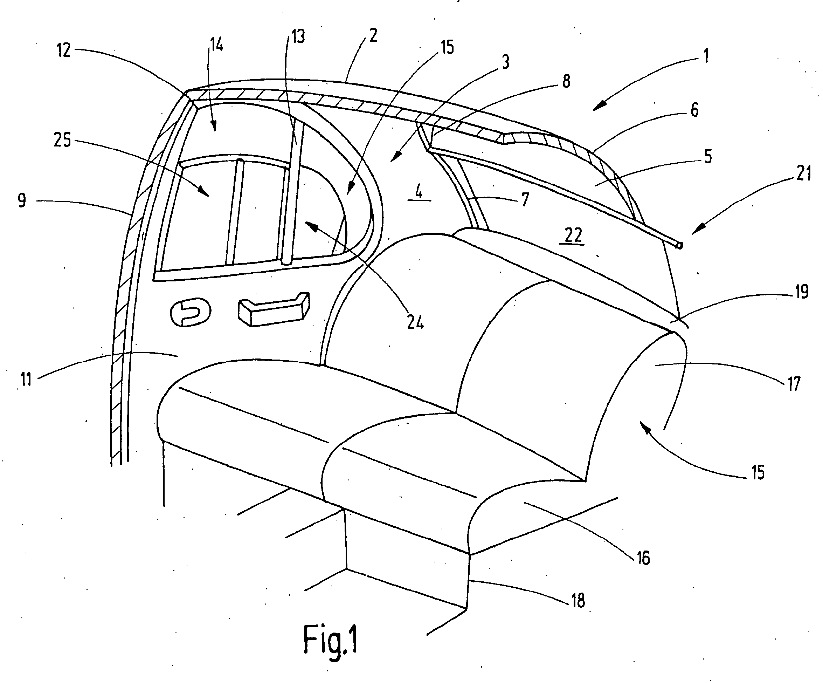

Fig. 1 stellt den aufgebrochenen abgeschnittenen Fondbereich eines PKW dar. Die Figur veranschaulicht einen Blick auf die rechte Innenseite, die zu der weggebrochenen linken Innenseite spiegelbildlich ist. Soweit nichts anderes angegeben, gelten die Erläuterungen zur rechten Karosserieseite sinngemäß auch für die linke Karosserieseite. Die Darstellung ist vereinfacht, so sind beispielsweise Karosserieinnenstrukturen, wie Versteifungen und Befestigungsmittel nicht gezeigt, da die Darstellung für das Verständnis der Erfindung nicht erforderlich ist.

Der veranschaulichte Karosserieabschnitt 1 weist ein Dach 2 auf, von dem seitlich eine C-Säule 3 nach unten zu einer nicht gezeigten Bodengruppe führt. Eine entsprechende C-Säule wäre auf der weggebrochenen Seite des Fahrzeugs zu denken. Die C-Säule 3 ist auf der Innenseite mit einer Verkleidung 4 versehen.

Das Dach 2 geht an seiner Hinterkante in ein Heckfenster 5 über, das an der Oberseite von einer Fensteroberkante 6 begrenzt ist. Von den Seitenkanten, die zueinander spiegelbildlich verlaufen, ist lediglich ein Abschnitt 7 zu erkennen, der an einem Eckbereich 8 in die Fensteroberkante 6 übergeht.

Die Breite des Heckfensters 5 ist auf der Höhe der Gürtellinie der Karosserie größer als im Bereich der Fensteroberkante 6. Im Abstand vor der C-Säule 3 befindet sich eine B-Säule 9, an die in bekannter Weise eine hintere rechte Seitentür 11 anscharniert ist. Die rechte hintere Seitentür 11 enthält einen Fensterausschnitt 12, der durch eine vertikale Strebe 13 in einen im Wesentlichen viereckigen Abschnitt 14 und einen etwa dreieckigen Abschnitt 15 aufgeteilt ist.

Zu dem Innenraum gehört ferner eine Rücksitzbank 15 mit einer Rücksitzfläche 16 und einer Rücksitzlehne 17. Die Rücksitzfläche 17 liegt auf einer Bodengruppe 18 auf.

Zwischen der hinteren Oberkante der Rücksitzlehne 17 und dem Heckfenster 5 erstreckt sich eine Hutablage 19.

Das Heckfenster 5 ist mit einem Heckfensterrollo 21 versehen, von dem lediglich in Fig. 1 eine Rollobahn 22 zu erkennen ist. Weitere Rollos befinden sich bei dem Seitenfenster 12, und zwar in dem viereckigen Fensterabschnitt 14 eine Rollobahn 22 und in dem dreieckigen Abschnitt 15 eine Rollbahn 24.

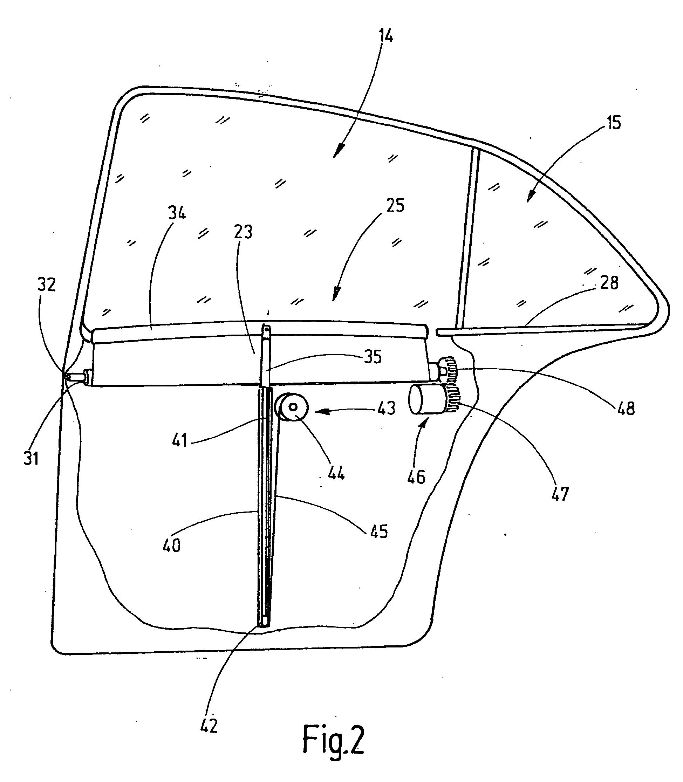

Die Seitentür aus Fig. 1 ist in Fig. 2 vergrößert veranschaulicht. Die Innenverkleidung ist aufgebrochen, um den Aufbau des Seitenfensterrollos 25 erkennen zu können.

Wie ersichtlich, wird die Unterseite des Fensterausschnittes durch eine Fensterunterkante 28 begrenzt, die einen nicht erkennbaren Schlitz enthält, durch den das Fensterrollo 25 aus dem Korpus der Seitentür 11 ausfahrbar ist. Zu dem Fensterrollo 25 gehört eine Rollobahn 29, die mit einer Kante an einer Wickelwelle 31 befestigt ist. Die Wickelwelle 31 ist unterhalb der Fensterunterkante 28 in dem Korpus der Tür mit Hilfe von Lagerzapfen 32 und 33 drehbar gelagert. Die Lagerböcke zum Lagern sind aus Übersichtlichkeitsgründen nicht gezeigt.

Die Rollobahn 29 besteht aus einem im Wesentlichen undehnbaren Material, das geeignet ist, hinreichende Abschattungswirkung zu erzeugen. Der Zuschnitt der Rollobahn 29 entspricht ungefähr der Größe des Fensterausschnittes 14. An der freien Kante ist die Rollobahn 29 mit einem Zugstab 34 versehen.

Als Führungseinrichtung für den Zugstab 34 zwischen der eingefahrenen Stellung, wie sie in Fig. 2 gezeigt, und der ausgefahrenen Stellung ist ein Tragstab 35 vorgesehen. Der Tragstab 35 ist eine gerade Stange, die in der Lage ist, hinreichend ausknicksicher den Zugstab 34 zu tragen und zu bewegen. Das obere Ende des Tragstabs 35 ist zug- und druckfest mit dem Zugstab 24 verbunden.

Der Tragstab 35 läuft in einer Führungsschiene 40, die in dem Türkorpus gehaltert ist und über die Fensterunterkante 28 nach oben nicht überstehen. Mit Hilfe der Führungsschiene 40 wird der Tragstab 35 etwa rechtwinklig zu der Fensterunterkante 28 gleitend verschieblich geführt. Die Länge des Tragstabs 35 ergibt sich aus der nachstehenden Funktionabeschreibung. Innerhalb des Türkorpus muss die Führungsschiene 40 nicht notwendigerweise über die gesamte Länge gerade verlaufen; sie kann beispielsweise um eine zu der Fahrzeugachse parallele Achse gekrümmt sein um dem Verlauf der Tür zu folgen.

Die Führungsschiene 40 enthält eine Führungsnut, die sich zum Betrachter hin mit einem durchgehenden Nutenschlitz 41 öffnet. Die hinter dem Nutenschlitz 41 liegende Nutenkammer ist im Querschnitt an den Querschnitt des Tragstabs 35 angepasst.

Mit dem unteren Ende des Tragstabs 35 eine Lasche 42 verbunden, die durch den Schlitz 41 nach außen vorsteht.

Der Tragstab 35 ist durch einen eigenen Federmotor 43 in die ausgefahrene Stellung vorgespannt. Der Federmotor 43 sitzen knapp unterhalb der Fensterunterkante 28. In der Darstellung nach Fig. 2 ist er unterhalb der Wickelwelle 31 dargestellt. Der Federmotor 43 weist ein drehbar gelagertes Federgehäuse 44 auf in dem sich eine Spiralfeder ähnlich einer Uhrwerksfeder befindet. Das innenliegende Federende ist drehfest verankert, während das Federgehäuse sich drehen kann. Das Federgehäuse 44 bildet eine zylindrische Außenumfangsfläche. An dieser Fläche ist ein als Textilband ausgeführtes Zugband 45 mit einem Ende befestigt. Das andere Ende des Bands 45 ist mit der Lasche 42 verbunden.

Schließlich gehört zu dem Seitenfensterrollo 25 noch eine Getriebemotoranordnung 46, die über ein Ausgangszahnrad 47 ein Zahnrad 48 antreibt, das drehfest koaxial zu der Wickelwelle 31 angeordnet ist.

Die Funktionsweise des Seitenfensterrollos 25 ist wie folgt:

Im eingefahrenen Zustand ist die Rollobahn 29 soweit auf der Wickelwelle 31 aufgewickelt, bis die Zugstange 34 mit ihrer Oberseite oder Oberkante mit der Fensterunterkante 28 etwa bündig ist. In dieser Position hat der Tragstab 35 seine maximale Eintauchtiefe. Das bedeutet, dass das Zugband 45 maximal von dem Federmotor 43 abgewickelt ist.

Die selbsthemmende Wirkung des Getriebemotors 47 hindert den Federmotor 43 daran die Rollobahn 29 von der Wickelwelle 31 abzuziehen. Solange der Motor 47 abgeschaltet ist, bleibt das Seitenfensterrollo 25 in der gezeigten Position.

Wenn der Benutzer das Seitenfensterrollo 25 ausfahren will, setzt er den Getriebemotor 47 entsprechend in Gang. Hierdurch wird die Wickelwelle 31 im Sinne eines Abwickelns der Rollobahn 29 in Umdrehungen versetzt. In dem Maße, in dem Rollobahn 29 von der Wickelwelle 31 freigegeben wird, schiebt der Federmotor 43 über den Tragstab 35 den Zugstab 34 nach oben. Diese Wirkung kommt zustande, weil der Federmotor 43 über das Zugband 45 bestrebt ist, das untere Ende des Tragstabs 35 in Richtung auf die Fensterunterkante 28 nach oben anzuheben bzw. zu verschieben.

Wenn die Rollobahn 29 vollständig ausgefahren ist, d.h. die Zugstange 34 an der Fensteroberkante angekommen ist, wird durch eine entsprechende Steuerung, die hier nicht Gegenstand der Erfindung ist, der Getriebemotor 47 stillgesetzt. Dadurch wird der Federmotor 43 gehindert, den Tragstab 35 weiter auszuschieben, weil die undehnbare Rollobahn 29 in Folge der gebremsten Wickelwelle 31 eine weitere Rollobahnbewegung 29 stoppt.

In der oberen Stellung ist das Zugband 45 auf das Federmotorgehäuse 44 des Federmotors 43 maximal aufgewickelt. In der obersten Stellung muss, damit die Spannung in dem Zugband 45 erhalten bleibt, das untere Ende des Tragstabs 35 ein entsprechendes Stück unterhalb des Federmotors 43 stehen bleiben.

Zum Einfahren des Seitenfensterrollos 25 wird der Getriebemotor 47 mit umgekehrter Drehrichtung in Gang gesetzt.

Hierdurch wird die Wickelwelle 31 im Sinne eines Aufwickelns der Rollobahn 29 in Umdrehungen versetzt. Da die Rollobahn 29 undehnbar ist, werden hierüber die entsprechenden Kräfte auf den Zugstab 34 übertragen und von dort auf den Tragstab 35, der gezwungen wird entsprechend zunehmend tiefer in die Führungsschienen 40 einzutauchen. Bei der Abwärtsbewegung wird entsprechend das Zugband 45 von dem Federmotor 43 abgewickelt. Wie die Vorspannung innerhalb des Federmotors 43 zustande kommt, braucht an dieser Stelle nicht erläutert zu werden, es ist für den Fachmann selbstverständlich.

Die Verwendung eines Zugbandes hat den Vorteil, dass ein geordnetes Aufwickeln der Lagen übereinander stattfindet.

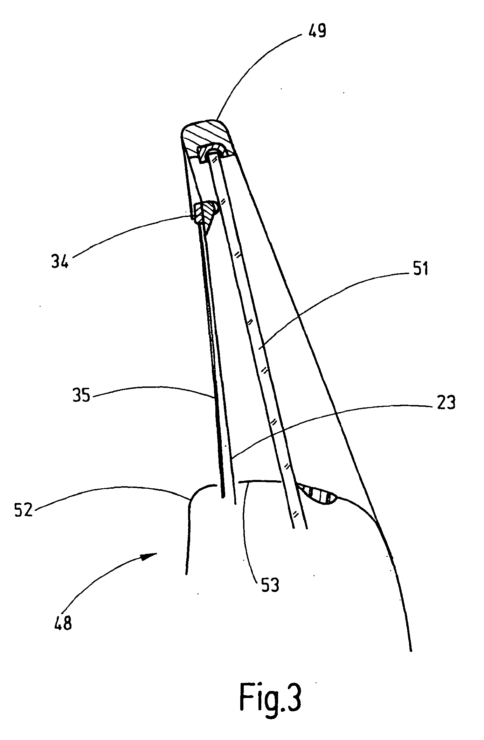

Fig. 3 zeigt einen stark schematisierten Schnitt durch die Fahrzeugtür gemäß Fig. 2 und zwar liegt die Schnittebene parallel zur Querachse des Fahrzeugs. Zu erkennen ist ein oberer Teil eines Türkorpus 48, über dem sich ein Fensterrahmen 49 spannt. Innerhalb des Fensterrahmens ist eine Scheibe 51 des Seitensfensters 14 verschieblich geführt. Zu dem Türkorpus 48 gehört eine Innenverkleidung 52, die an der Oberkante einen Auszugsschlitz 53 enthält, der parallel zu der Fensterscheibe 51 verläuft und von dieser beabstandet ist. Durch den Auszugsschlitz 53 verläuft sowohl die Rollobahn 23 als auch der Tragstab 35, die beide in der ausgezogenen Position zu sehen sind. Am oberen Ende des Tragstabs 35 ist der Zugstab 34 zu erkennen.

Die Anordnung ist derart getroffen, dass der Tragstab im Bereich des Auszugsschlitzes 53 theoretisch in einer Ebene ausfährt, die mit der durch die Fensterscheibe 14 definierten Ebene einen spitzen Winkel bildet, der am oberen Ende des Seitenfensters 14 liegt. Dadurch wird erreicht, dass der Zugstab 35 von der Innenseite der Fensterscheibe 51 beabstandet ist, wenn er in dem Auszugsschlitz 53 liegt. Wenn hingegen das Seitenfensterrollo 25 ausgefahren wird, nähert sich der Zugstab 34 zunehmend der Innenseite der Fensterscheibe 51. Etwa im oberen Drittel der Fensterscheibe 51 kommt eine Berührung zwischen der Innenseite der Fensterscheibe 51 und dem Tragstab 34 ,bzw. Teilen davon, zustande. Während der weiteren Ausfahrbewegung der Rollobahn 23 wird der Tragstab 35 wie gezeigt elastisch zum Fahrzeuginneren hin ausgelenkt. Er ist dementsprechend etwas gekrümmt während die Rollobahn 23 exakt gerade verläuft. Die erforderliche Biegekraft für den Tragstab 35 erzeugt eine Andruckkraft für den Zugstab 34 an der Fensterscheibe 51. Die andere Kraft ist so gewählt, dass die beim Fahren auftretenden Erschütterungen nicht zum Abheben des Zugstabs 34 von der Innenseite der Scheibe 51 führen und Klappergeräusche verursachen können.

Wie sich aus der Darstellung ferner ergibt, verliert der Zugstab 34 beim Einfahren etwa nach einem Drittel Einfahrbewegung den Kontakt zu der Scheibe 51. Im unteren Bereich ist sogar relativ viel Platz zwischen der Innenseite der Fensterscheibe 51 und dem Zugstab 34 vorhanden. In Verbindung mit den zwangsläufig auftretenden Erschütterungen kann es geschehen, dass der Zugstab 34 Schwingungen um die Längsachse des Tragstabs 35 ausführt. Zufolge dieser Schwingungen kann der Zugstab 34 mit seinen äußeren Enden, die in Längsrichtung des Fahrzeugs zeigen, auf den Schlitzrändern des Auszugsschlitzes 53 aufstoßen. Dadurch wird ein weiteres Einfahren blockiert. Der Zugstab 34 bleibt damit auf der Oberseite der Innenverkleidung 52 liegen, anstatt wie konstruktionsmäßig vorgesehen, in den Auszugsschlitz 53 einzutauchen, um eine bündige Oberfläche zu erzeugen, die das Profil der Innenverkleidung im Bereich des Auszugsschlitzes 53 ergänzt.

Es ist ferner aus Fig. 3 und der Erläuterung zu ersehen, dass eine berührende Bewegung längs der Innenseite der Fensterscheibe 51 zustande kommt.

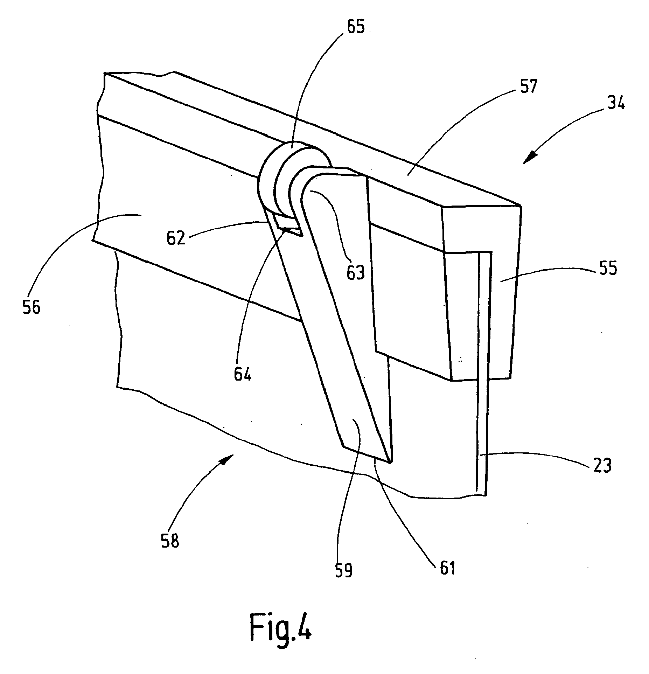

Fig. 4 zeigt einen endseitigen Abschnitt des Zugstabs 34, mit dem sowohl die Pendelschwingungen des Zugstabs um die Längsachse des Tragstabs 35 beherrscht werden, als auch die Berührung zwischen dem Zugstab 34 und der Fensterscheibe 51.

Wie ersichtlich, weist der Zugstab 34 einen innen liegendes L-förmiges Profil 55 auf, dass sich über die gesamte Länge der Oberkante der Rollobahn 23 erstreckt. In der von dem L-förmigen Profil 55 gebildeten Innenecke liegt die Rollobahn 23. Ein weiterer Stab 56 füllt die Innenecke des L-förmigen Profils 55 wie gezeigt vollständig aus und drückt die Rollobahn 23 gegen die entsprechende Seite des L-förmigen Profils 55. Der Stab 56 ist mit dem langen Schenkel des L-förmigen Profils 55, beispielsweise durch Ultraschallschweißen, punktuell verschweißt, wobei die Rollobahn 23 entsprechend eingeklemmt ist.

Das L-förmige Profil 55 bildet eine Oberseite 57, die bei vollständig eingefahrenem Rollo den Auszugsschlitz 53 verschließt, so dass die Oberseite 57 bündig und glatt das Profil der Innenverkleidung 52 fortsetzt.

In der Nähe des dargestellten Endes des Zugstabs 34 befindet sich eine Einführhilfe 58 in Gestalt eines keilförmigen Elementes mit einer Keilfläche 59. Das Einlaufelement 58 ist beispielsweise einstückig mit dem Stab oder der Leiste 56 auf einem entsprechenden Thermoplasten gespritzt. Die Keilfläche 59 zeigt zu der Fensterscheibe 51 und beginnt auf der Fläche der Rollobahn 23 im Abstand zu der Unterkante der Leiste 56. Die Höhe des Bereiches mit dem das Einlaufelement die Rollobahn 23 überdeckt, beträgt ca. 10mm bis 15mm. Es entsteht so eine Schneide 61, die auf der Rollobahn 23 unmittelbar aufliegt. Ausgehend von der Schneide 61 führt die Keilfläche 59 unter einem konstanten Winkel von ca. 5° bis 20° von der durch die Rollobahn 23 definierten Ebene weg in Richtung zu der Oberseite 57.

Die Keilfläche 59 hat eine Breite, gemessen parallel zur Längserstreckung des Zugstabs 34 von ca. 5mm bis 15mm.

Eine weitere Keilfläche 59 ist an einer weiteren Ausrichthilfe 58 ausgebildet, die entsprechenderweise am anderen Ende des Zugstabs 34 befindet und nicht im Einzelnen dargestellt werden muss.

Die Einführhilfe 58 ist im Bereich ihres oberen Endes, dort, wo sie gemessen senkrecht zu der Fensterscheibe 51 eine beachtliche Dicke aufweist, genutet und bildet zwei zueinander parallelen Schenkel 62 und 63, die eine Nut 64 begrenzen. In der Nut 64 ist ein Anlageelement in Gestalt einer kleinen Rolle 65 drehbar gelagert.

Das nicht gezeigte Ausrichtelement 58 im anderen Ende des Zugstabs 34 ist in ähnlicherweise mit einer Rollo 65 versehen. Beim Ausfahren des Fensterrollos 25 sich der Zugstab 34 an die Fensterscheibe 51 annähert, kommt der Zugstab 34 mit zwei in der Nähe der Enden liegenden Punkte in Gestalt der drehbar gelagerten Rollen 65 mit der Fensterscheibe 51 in Berührung. Während der weiteren Ausfahrbewegung rollen die Rollen 65 längs der Fensterscheibe 51 und verhindern, dass im Laufe der Zeit auf der Fensterscheibe Schleifspuren entstehen. Gleichzeitig wird eine definierte Anlage erzeugt, die sich auf die Enden des Zugstabs 34 beschränkt.

Beim Einfahren kommt sinngemäß dieselbe Rollbewegung zustande, bis der Kontakt zu der Fensterscheibe 51 endet.

Sobald sich der Zugstab 34 dem Auszugsschlitz 53 nähert, zwingen, gleichgültig wie groß die Auslenkbewegung ist, die beiden Keilflächen 59 den Zugstab 34 in eine ausgerichtete Lage, in der mit der Öffnung des Auszugsschlitzes 53 fluchtet. Da die Keilflächen 59 nach unten über die Unterseite des Zugstabs 34 verlängert sind, kann der Zugstab 34 mit seiner Unterseite nicht auf den Rändern des Schlitzes 53 aufstoßen und dort liegen bleiben.

Da zwei Ausrichtelemente 58 an beiden Enden des Zugatabs 34 vorhanden sind und beide in dieselbe Richtung zweigen, verhindert das eine Ausrichtelement eine Drehbewegung in der einen und das andere Ausrichtelement eine Drehbewegung in der entgegengesetzten Richtung um die Längsachse des Tragstabs 35.

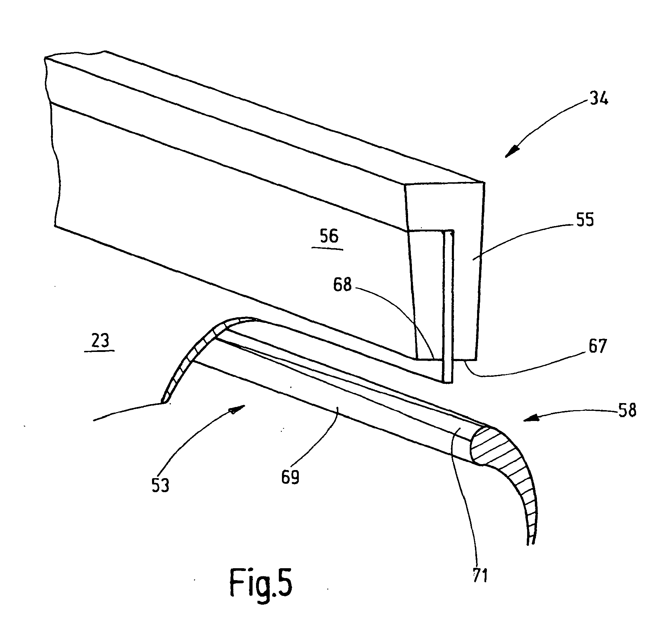

Fig. 5 zeigt eine alternative Ausführungsform der Ausrichthilfe 58. Der Zugstab 34 besteht wiederum aus zwei Leisten 55 und 56 zwischen denen die Rollobahn 23 eingespannt ist. Beide Stäbe 55 und 56 enden auf gleicher Höhe an Schmalseiten 67 und 68, die etwa auf gleicher Höhe liegen und nahezu rechtwinklig gegenüber der Rollobahn 23 ausgerichtet sind.

Als Ausrichthilfe 58 ist beispielsweise an dem von dem Fenster 51 abliegenden Rand 69 des Auszugsschlitzes 53 eine Abschrägung vorgesehen. Die Abschrägung bildet eine Schrägfläche 71, die als Dreiecksfläche in Richtung auf den Tragstab 35 spitz zuläuft und sich in Richtung zu dem jeweiligen Ende des Auszugsschlitz 53 erweitert. Die Schrägfläche 71 ist somit eine Dreiecksfläche, die gegenüber der durch die Rollobahn 23 definierten Ebene in zweifacher Hinsicht geneigt ist, wie dies Fig. 4 erkennen lässt.

Die Ausrichthilfe 53 beschränkt sich im Wesentlichen auf die Enden des Auszugsschlitzes 53 und wirkt damit nur mit den Enden des Zugstabs 34 zusammen.

Bei kleinen Ausrichtfehlern zwingen die ohnehin vorhandenen Abrundungen sowohl an dem Zugstab 34 als auch an dem Schlitzrand 69 des Auszugsschlitzes 53 den Zugstab 34 in die richtige Lage. Lediglich bei größeren Fehlern, die eine Überdeckung in der Größenordnung von 2 mm bis 3 mm, beispielsweise zwischen der Unterseite 67 und der Schlitzrandkante des Schlitzrandes 69 erzeugen würden, tritt die unerwünschte Blockierung ein. An dieser Stelle greifen die Schrägflächen 71 ein, die eine stumpfe Überdeckung verhindern und ein Drehmoment erzeugen, dass den Zugstab 34 in die ausgerichtete Lage zwingen. Sie wirken wie eine Ausschnitt aus einer Schraubenfläche.

Die Länge der Schrägfläche ergibt sich aus den sonstigen Randbedingungen und kann leicht empirisch ermittelt werden.

Ein Seitenfensterrollo ist mit einem Tragstab versehen, dessen freies Ende mit einem Zugstab verbunden ist. Um Klappergeräusche zu verhindern, sind an den Enden des Zugstabs Rollen vorhanden, die sich an der Scheibe anlegen, so dass der Tragstab beim Ausfahren elastisch gebogen wird.

Ferner sind an dem Rollo Ausrichthilfen vorhanden die verhindern, dass der Tragstab beim Einfahren aufgrund von Schwingungen um die Längsachse des Tragstabs auf den Schlitzrändern aufstößt und ein weiteres Einfahren blockiert.

## Patentansprüche

1. Seitenfensterrollo (25) für Kraftfahrzeuge (1) mit einem Seitenfenster (14), das eine Fensterunterkante (28) und eine Fensteroberkante aufweist, wobei an der Fensterunterkante (28) ein Auslaufschlitz (53) vorhanden ist,
mit einer unterhalb des Auslaufschlitzes drehbar gelagerten Wickelwelle (31),
mit einer Rollobahn (23), die einen dem Seitenfenster (14) entsprechenden Zuschnitt aufweist, die mit einer Kante an der Wickelwelle (31) befestigt ist und die eine von der Wickelwelle (31) abliegende Kante aufweist,
mit einem Zugstab (34), der an der von der Wickelwelle (31) abliegenden Kante befestigt ist,
mit einem einzigen Tragstab (35), der ein oberes Ende sowie ein unteres Ende aufweist und der mit seinem oberen Ende mit dem Zugstab (34) verbunden ist,
mit einer Führungseinrichtung (40) für den Tragstab (35), die unterhalb der Fensterunterkante (28) angeordnet ist um den Tragstab (35) im vorgegebenen Winkel zu der Fensterunterkante (28) vertikal zu führen, und
mit einer Ausrichthilfe (58), **dadurch gekennzeichnet, dass** die Ausrichthilfe derart gestaltet ist, dass der Zugstab (34) durch die Vertikalbewegung im Sinne eines Einfahrens der Rollobahn (23) in eine Lage ausgerichtet wird, in der er zu dem Auslaufschlitz (53) parallel ausgerichtet ist, und dass die Ausrichthilfe wenigstens einen Ausrichtfortsatz (59) an der Unterseite des Zugstabs (34) aufweist, der sich zu der Rollo-bahn (23) hin verjüngt, wobei der Ausrichtfortsatz (59) keilförmig gestaltet ist, dessen Keilspitze (61) zu der Rollbahn (23) zeigt.

2. Seitenfensterrollo nach Anspruch 1, **dadurch gekennzeichnet, dass** die Ausrichthilfe (58,59) lediglich an dem Zugstab (34) ausgebildet ist.

3. Seitenfensterrollo nach Anspruch 1, **dadurch gekennzeichnet, dass** die Ausrichthilfe (58) zwei Teile umfasst, von denen der eine (71) an dem Auslaufschlitz (53) und der andere (59) an dem Zugstab (34) ausgebildet ist.

4. Seitenfensterrollo nach Anspruch 1, **dadurch gekennzeichnet, dass** der Auslaufschlitz (53) sich als Ausrichthilfe (58) im Querschnitt gesehen nach oben trichterförmig erweitert, wobei die Erweiterung (71) vorzugsweise auf den Endbereich des Auslaufschlitzes (53) beschränkt ist.

5. Seitenfensterrollo nach Anspruch 1, **dadurch gekennzeichnet, dass** zwei Ausrichtfortsätze vorhanden sind, die beidend an dem Tragstab angeordnet sind.

6. Seitenfensterrollo nach Anspruch 1, **dadurch gekennzeichnet, dass** die Ausrichtfortsätze sich über die Länge des Zugstabs erstrecken.

7. Seitenfensterrollo nach Anspruch 1, **dadurch gekennzeichnet, dass** die Führungseinrichtung (40) für den Tragstab (35) von einer Führungsschiene gebildet ist, die eine Führungsnut (41) enthält, die sich mit konstantem Querschnitt über die Führungsschiene (40) fortsetzt.

8. Seitenfensterrollo nach Anspruch 7, **dadurch gekennzeichnet, dass** der Tragstab (35) mit einem Fortsatz (42) versehen ist, der aus der Führungsnut (41) nach außen vorsteht.

9. Seitenfensterrollo nach Anspruch 1, **dadurch gekennzeichnet, dass** der jeweilige Tragstab (35) mittels einem zugeordneten linienförmigen Betätigungsglieds (45) zumindest in Ausschubrichtung bewegbar ist.

10. Seitenfensterrollo nach Anspruch 1, **dadurch gekennzeichnet, dass** es eine Antriebseinrichtung (43,46) aufweist.

11. Seitenfensterrollo nach Anspruch 10, **dadurch gekennzeichnet, dass** die Antriebseinrichtung (43,46) zumindest dazu eingerichtet ist die Wickelwelle (31) in Bewegung zu setzen.

12. Seitenfensterrollo nach Anspruch 10, **dadurch gekennzeichnet, dass** die Antriebseinrichtung (43,46) einen Federmotor (43) umfasst, der entweder mit der Wickelwelle (31) oder dem Tragstab (35) gekoppelt ist.

13. Seitenfensterrollo nach Anspruch 10, **dadurch gekennzeichnet, dass** die Antriebseinrichtung zusätzlich zu dem Federmotor (43) einen Getriebemotor (46) aufweist.

14. Seitenfensterrollo nach Anspruch 10, **dadurch gekennzeichnet, dass** der Wickelwelle (31) der elektrischer Getriebemotor (46) zugeordnet ist.

15. Seitenfensterrollo nach Anspruch 1, **dadurch gekennzeichnet, dass** der Tragstab (35) zumindest angenähert rechtwinkelig zu der Fensterunterkante (28) geführt ist.

16. Seitenfensterrollo nach Anspruch 1, **dadurch gekennzeichnet, dass** der Tragstab (35) zumindest angenähert rechtwinkelig zu der Fensterunterkante (28) geführt ist.

## Claims

1. Side window roller blind (25) for motor vehicles (1) with a side window (14), which has a window lower edge (28) and a window upper edge, wherein a run-out slot (53) is provided on the window lower edge (28),
with a winding shaft (31) rotatably mounted below the run-out slot,
with a blind sheet (23), which has a blank that corresponds to the side window (14), is fastened to the winding shaft (31) at one edge and has an edge remote from the winding shaft (31),
with a pull rod (34), which is fastened to the edge remote from the winding shaft (31), with a single carrier rod (35), which has an upper end and also a lower end and is connected to the pull rod (34) at its upper end,
with a guide arrangement (40) for the carrier rod (35) arranged below the window lower edge (28) to vertically guide the carrier rod (35) at the predetermined angle to the window lower edge (28), and
with an alignment aid (58), **characterised in that** the alignment aid is configured in such a manner that the pull rod (34) is aligned by the vertical movement in the direction of a retraction of the blind sheet (23) into a position, in which it is aligned parallel to the run-out slot (53), and that the alignment aid has at least one alignment extension (59) on the underside of the pull rod (34), which tapers towards the blind sheet (23), wherein the alignment extension (59) is configured in the shape of a wedge, the point of the wedge (61) thereof pointing towards the blind sheet (23).

2. Side window roller blind according to claim 1, **characterised in that** the alignment aid (58, 59) is only configured on the pull rod (34).

3. Side window roller blind according to claim 1, **characterised in that** the alignment aid (58) comprises two parts, one (71) of which is configured at the run-out slot (53) and the other (59) is configured on the pull rod (34).

4. Side window roller blind according to claim 1, **characterised in that**, viewed in cross-section, the run-out slot (53) widens upwards in a funnel shape as an alignment aid (58), wherein the widened portion (71) is preferably restricted to the end region of the run-out slot (53).

5. Side window roller blind according to claim 1, **characterised in that** two alignment extensions are provided, which are arranged on both ends of the carrier rod.

6. Side window roller blind according to claim 1, **characterised in that** the alignment extensions extend over the length of the pull rod.

7. Side window roller blind according to claim 1, **characterised in that** the guide arrangement (40) for the carrier rod (35) is formed by a guide rail, which coutains a guide groove (41), which extends with a constant cross-section over the guide rail (40).

8. Side window roller blind according to claim 7, **characterised in that** the carrier rod (35) is provided with an extension (42), which projects outwards from the guide groove (41).

9. Side window roller blind according to claim 1, **characterised in that** the respective carrier rod (35) is movable at least in push-out direction by means of an associated linear operating member (45).

10. Side window roller blind according to claim 1, **characterised in that** it has a drive arrangement (43, 46).

11. Side window roller blind according to claim 10, **characterised in that** the drive arrangement (43, 46) is arranged at least to set the winding shaft (31) in motion.

12. Side window roller blind according to claim 10, **characterised in that** the drive arrangement (43, 46) comprises a spring motor (43), which is coupled either to the winding shaft (31) or the carrier rod (35).

13. Side window roller blind according to claim 10, **characterised in that** the drive arrangement has a geared motor (46) in addition to the spring motor (43).

14. Side window roller blind according to claim 10, **characterised in that** the electric geared motor (46) is associated with the winding shaft (31).

15. Side window roller blind according to claim 1, **characterised in that** the carrier rod (35) is guided at least approximately at right angles to the window lower edge (28).

16. Side window roller blind according to claim 1, **characterised in that** the carrier rod (35) is guided at least approximately at right angles to the window lower edge (28).

## Revendications

1. Store enrouleur de fenêtre latérale (25) pour véhicules (1) pourvus d'une fenêtre latérale (14) qui présente un bord inférieur de fenêtre (28) et un bord supérieur de fenêtre, une fente de sortie (53) étant ménagée dans le bord inférieur de fenêtre (28), comprenant un arbre d'enroulement (31) monté tournant au-dessous de la fente de sortie, comprenant un écran enroulable (23) qui présente une forme découpée correspondant à la fenêtre latérale (14), qui est fixé par un bord à l'arbre d'enroulement (31) et qui présente un bord éloigné de l'arbre d'enroulement (31), comprenant une tige de traction (39) qui est fixée au bord éloigné de l'arbre d'enroulement (31), comprenant une seule tige de support (35) qui présente une extrémité supérieure ainsi qu'une extrémité inférieure et qui est reliée par son extrémité supérieure à la tige de traction (34), comprenant pour la tige de support (35) un dispositif de guidage (40) qui est disposé au-dessous du bord inférieur de fenêtre (28) pour guider la tige de support (35) verticalement selon un angle prédéfini par rapport au bord inférieur de fenêtre (28), et comprenant un moyen d'aide à l'alignement (58), **caractérisé en ce que** le moyen d'aide à l'alignement est conçu de façon que la tige de traction (34), du fait du mouvement vertical dans le sens d'un enroulement de l'écran enroulable (23), soit alignée dans une position où elle est alignée parallèlement à la fente de sortie (53), et **en ce que** le moyen d'aide à l'alignement présente, sur la face inférieure de la tige de traction (34), au moins un prolongement d'alignement (59) qui se rétrécit en direction de l'écran enroulable (23), le prolongement d'alignement (59) étant conformé en coin dont la pointe de coin (61) est dirigée vers l'écran enroulable (23).

2. Store enrouleur de fenêtre latérale selon la revendication 1, **caractérisé en ce que** le moyen d'aide à l'alignement (58, 59) est formé seulement sur la tige de traction (34).

3. Store enrouleur de fenêtre latérale selon la revendication 1, **caractérisé en ce que** le moyen d'aide à l'alignement (58) comprend deux parties, dont l'une (71) est formée sur la fente de sortie (53) et l'autre (59) sur la tige de traction (34).

4. Store enrouleur de fenêtre latérale selon la revendication 1, **caractérisé en ce que**, vue en coupe, la fente de sortie (53) s'élargit vers le haut en forme d'entonnoir pour former le moyen d'aide à l'alignement (58), l'élargissement (71) étant de préférence limité à la zone d'extrémité de la fente de sortie (53).

5. Store enrouleur de fenêtre latérale selon la revendication 1, **caractérisé en ce qu'**il est prévu deux prolongements d'alignement qui sont disposés aux deux extrémités de la tige de support.

6. Store enrouleur de fenêtre latérale selon la revendication 1, **caractérisé en ce que** les prolongements d'alignement s'étendent sur la longueur de la tige de traction.

7. Store enrouleur de fenêtre latérale selon la revendication 1, **caractérisé en ce que** le dispositif de guidage (40) pour la tige de support (35) est formé par un rail de guidage qui comporte une rainure de guidage (41) qui se poursuit avec une section transversale constante sur tout le rail de guidage (40).

8. Store enrouleur de fenêtre latérale selon la revendication 7, **caractérisé en ce que** la tige de support (35) est pourvue d'un prolongement (42) qui fait saillie vers l'extérieur depuis la rainure de guidage (41).

9. Store enrouleur de fenêtre latérale selon la revendication 1, **caractérisé en ce que** la tige de support (35) respective est déplaçable au moins en direction de déploiement au moyen d'un organe d'actionnement linéaire (45) associé.

10. Store enrouleur de fenêtre latérale selon la revendication 1, **caractérisé en ce qu'**il présente un dispositif d'entraînement (43, 46).

11. Store enrouleur de fenêtre latérale selon la revendication 10, **caractérisé en ce que** le dispositif d'entraînement (43, 46) est au moins conçu pour mettre en mouvement l'arbre d'enroulement (31).

12. Store enrouleur de fenêtre latérale selon la revendication 10, **caractérisé en ce que** le dispositif d'entraînement (43, 46) comprend un moteur à ressort (43) qui est couplé soit à l'arbre d'enroulement (31), soit à la tige de support (35).

13. Store enrouleur de fenêtre latérale selon la revendication 10, **caractérisé en ce que** le dispositif d'entraînement présente un motoréducteur (46) en plus du moteur à ressort (43).

14. Store enrouleur de fenêtre latérale selon la revendication 10, **caractérisé en ce que** le motoréducteur électrique (46) est associé à l'arbre d'enroulement (31).

15. Store enrouleur de fenêtre latérale selon la revendication 1, **caractérisé en ce que** la tige de support (35) est guidée au moins approximativement à angle droit par rapport au bord inférieur de fenêtre (28).

16. Store enrouleur de fenêtre latérale selon la revendication 1, **caractérisé en ce que** la tige de support (35) est guidée au moins approximativement à angle droit par rapport au bord inférieur de fenêtre (28).
